# FASCICULE DE BREVET EUROPEEN

(11) **EP 2 428 697 B1**
(45) Date de publication et mention de la délivrance du brevet: **08.04.2015**
(21) Numéro de dépôt: 11180215.3
(22) Date de dépôt: 06.09.2011
(51) Int. Cl.: F16F 9/58, B60G 15/06

(54) **Butee de suspension et jambe de suspension**
Radaufhängungslager und Federbein
Bump stop and MacPherson strut

(30) Priorité: 08.09.2010 FR 1003577
(43) Date de publication de la demande: 14.03.2012
(73) Titulaire: NTN-SNR Roulements, 74000 Annecy (FR)
(72) Inventeur: Rimoux, Christophe, 74350 Villy le Pelloux (FR)
(74) Mandataire: Novagraaf Technologies

(56) Documents cités:
- EP-A1- 1 574 741
- WO-A1-89/05242
- DE-A1- 4 331 585

## Description

### DOMAINE TECHNIQUE DE L'INVENTION

L'invention se rapporte à une butée de suspension pour une jambe de force comportant un amortisseur télescopique et un ressort à boudin, et plus spécifiquement à une butée de suspension comprenant un roulement disposé entre le ressort à boudin et la superstructure du véhicule, et une butée de choc déformable ayant fonction de tampon d'amortissement de fin de course de contraction de l'amortisseur télescopique. L'invention se rapport également à une jambe de suspension comportant une telle butée.

### ETAT DE LA TECHNIQUE ANTERIEURE

Il est possible de fixer la butée de choc à la rondelle inférieure du roulement ou à un élément fixe par rapport à cette rondelle, tel qu'illustré par exemple par les documents FR 2 859 513 ou FR 2 779 096. Dans ce cas, les forces importantes appliquées à la butée de choc par le cylindre d'amortisseur sont transmis à la caisse du véhicule par l'intermédiaire du roulement, ce qui n'est pas favorable à ce dernier.

Il est également possible de fixer la butée de choc à la rondelle supérieure ou à un couvercle rigide ou non, fixé à la rondelle supérieure, comme illustré par exemple par le document FR 2 839 471. Mais dans une telle configuration, il est difficile de prévoir un espace pour la déformation radiale de la butée de choc. En pratique, une partie importante de la butée de choc est logée dans une coupelle indéformable, et n'a de ce fait aucune utilité pratique pour l'absorption des chocs. L'encombrement de la butée est donc important. Par ailleurs, ce type de configuration est difficilement adaptable à une butée inclinée, c'est à dire à une butée de suspension dont l'axe de rotation n'est pas parallèle à l'axe de l'amortisseur télescopique.

On connaît également des butées de suspension dont la butée de choc est directement fixée à la caisse du véhicule, ou à un élément de fixation de la butée de suspension à la caisse du véhicule, de manière indépendante du roulement, comme illustré par exemple dans les documents EP 1 172 238 ou EP 1 029 719. La partie de la butée de choc qui se trouve reliée à l'élément de fixation est alors confinée dans une coupelle indéformable, de sorte qu'elle ne participe pas à l'amortissement des chocs. De plus, le roulement se trouve vulnérabilisé car il existe un passage non protégé pour une introduction de polluant par l'ouverture radiale intérieure entre les rondelles du roulement. Dans la variante illustrée dans le document DE 1 975 268, la butée de choc n'est pas tenue axialement, ce qui n'est pas satisfaisant.

Le document EP 1 574 741 A1 décrit une jambe de force comportant une butée fixée à l'élément rigide de fixation.

### EXPOSE DE L'INVENTION

L'invention vise à remédier aux inconvénients de l'état de la technique, et notamment à proposer une butée de suspension d'encombrement réduit et ne transmettant pas les chocs au roulement.

Pour ce faire est proposé selon un premier aspect de l'invention une butée de suspension pour une jambe de force comportant un amortisseur télescopique et un ressort à boudin, la butée comprenant :
- un roulement comportant une rondelle supérieure et une rondelle inférieure définissant des chemins de roulement sur lesquels roulent des corps roulants, la rondelle inférieure étant solidaire d'une interface d'appui contre une extrémité supérieure du ressort à boudin;
- un élément rigide de fixation de la butée de suspension à la superstructure du véhicule, la rondelle supérieure étant en appui axial direct ou indirect sur l'élément rigide de fixation; et
- une butée de choc en matériau déformable pour dissiper l'énergie de choc transmise par l'amortisseur, la butée de choc comporte un bourrelet annulaire logé dans un volume annulaire délimité axialement par une portée inférieure solidaire de la rondelle supérieure et une portée supérieure solidaire de l'élément rigide de fixation.

La géométrie globale de la butée est particulièrement compacte. L'encombrement axial est réduit. Le positionnement de la butée de chocs est sécurisé. Les efforts appliqués à la butée de choc sont transmis directement à l'élément de fixation, sans passer par le roulement.

Selon un mode de réalisation préféré, on peut prévoir que la portée inférieure et la portée supérieure délimitent un espace annulaire dans lequel est logé le bourrelet, l'espace annulaire s'étendant radialement vers l'extérieur au-delà du bourrelet. Ainsi, le volume de l'espace annulaire est plus important que le volume du bourrelet, ce qui permet une déformation radiale du bourrelet lorsque la butée de choc est sollicitée.

Selon un mode de réalisation préféré, le bourrelet annulaire est situé radialement à l'intérieur du cercle primitif du roulement. L'encombrement axial de la butée est ainsi réduit.

Selon un mode de réalisation préféré, l'élément de fixation comporte une zone d'appui annulaire ayant une dimension radiale supérieure ou égale au diamètre primitif du roulement, la rondelle supérieure étant en appui axial direct ou indirect sur la zone d'appui annulaire de l'élément rigide de fixation. Ainsi est réalisée une bonne transmission des efforts et des couples entre le châssis du véhicule et la jambe de force.

Selon un mode de réalisation, la portée supérieure est plane. D'autres variantes, par exemple de forme tronconique, sont envisageables. Une configuration plane et sensiblement perpendiculaire à la direction privilégiée de l'amortisseur permet de faire travailler la butée de choc essentiellement en compression. Selon un mode de réalisation, la portée supérieure plane est perpendiculaire à l'axe de rotation du roulement. Alternativement, la portée supérieure peut être oblique par rapport à l'axe de rotation du roulement. La portée inférieure est quant à elle préférentiellement plane et parallèle à la portée supérieure.

Suivant un mode de réalisation la portée annulaire inférieure est formée par un couvercle rigide interposé entre la rondelle supérieure et l'élément rigide de fixation. Ce couvercle peut remplir des fonctions multiples. Il comporte préférentiellement une jupe extérieure de protection du roulement, située radialement à l'extérieur du roulement. Cette jupe descend préférentiellement en dessous du cercle primitif du roulement. Elle fait face à une face annulaire de la rondelle inférieure ou d'un support d'appui de la rondelle inférieure, pour créer une perte de charge, c'est-à-dire un rétrécissement pouvant par exemple être conformé en labyrinthe, entre le roulement et l'extérieur.

Le couvercle peut être lié à l'élément rigide de fixation par l'intermédiaire d'un bloc filtrant élastomère annulaire. Il peut alternativement être directement lié à l'élément rigide de fixation.

Selon un mode de réalisation, la portée annulaire supérieure est formée par l'élément rigide de fixation. Alternativement, la portée annulaire supérieure peut être formée par un bloc filtrant élastomère interposé entre l'élément rigide de fixation et la rondelle supérieure. Ce bloc filtrant élastomère formant la portée annulaire peut être surmoulé sur l'élément rigide de fixation. Il peut également s'interposer entre le roulement et l'élément rigide de fixation.

Selon un mode de réalisation, l'interface d'appui contre une extrémité supérieure du ressort à boudin comporte une face annulaire plane. Il peut comporter en outre une face cylindrique de guidage radial de la spire supérieure du ressort. La face annulaire plane de l'interface d'appui est préférentiellement perpendiculaire à l'axe de rotation du roulement, pour assurer une transmission essentiellement axiale des efforts.

L'interface d'appui peut être constituée par la rondelle inférieure ou par un support en matière plastique, avec ou non interposition d'un anneau élastomère.

La butée de choc est préférablement située radialement à l'intérieur du cercle primitif du roulement, ce qui limite l'encombrement axial de la butée de suspension.

La butée de suspension peut en outre être pourvue d'une manche déformable de protection de l'amortisseur, fixe par rapport à la rondelle inférieure et entourant la butée de choc. Cette manche peut avoir la forme d'un soufflet en accordéon. Elle protège à la fois la butée de choc et l'accès au roulement par son côté radial intérieur.

Selon un mode de réalisation, la butée de choc comporte un trou cylindrique de passage de la tige d'amortisseur.

Selon un autre aspect de l'invention, celle-ci a trait à une jambe de suspension comportant un amortisseur télescopique, un ressort à boudin entourant l'amortisseur télescopique et une butée de suspension tel que décrit précédemment.

### BREVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une jambe de suspension selon un premier mode de réalisation de l'invention;
- la figure 2, une vue en coupe d'une jambe de suspension selon un deuxième mode de réalisation de l'invention;
- la figure 3, une vue en coupe d'une jambe de suspension selon un troisième mode de réalisation de l'invention;
- la figure 4, une vue en coupe d'une jambe de suspension selon un quatrième mode de réalisation de l'invention;
- la figure 5, une vue en coupe d'une jambe de suspension selon un cinquième mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

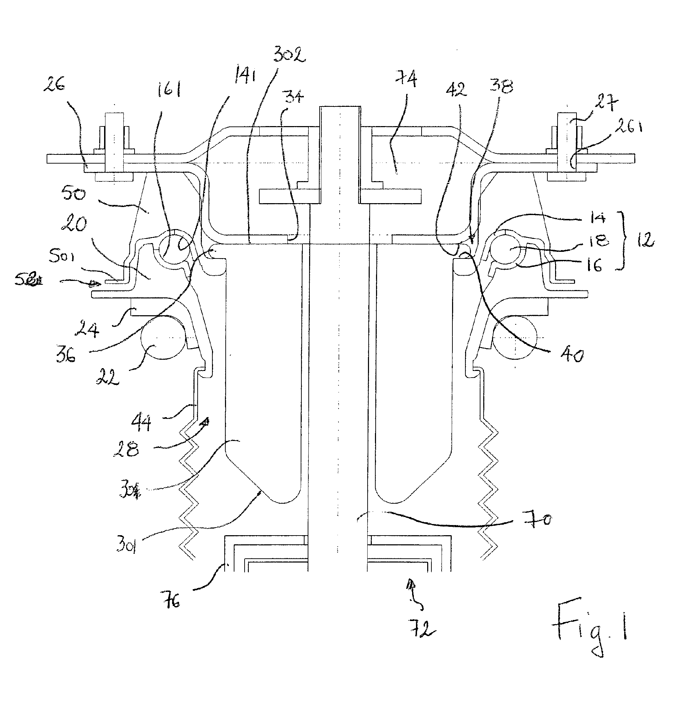

Sur la figure 1 est représentée une butée de suspension 10 constituant la partie haute d'une jambe de suspension, à l'interface entre la jambe de suspension et la superstructure d'un véhicule, en pratique sa caisse ou un élément de son châssis. Cette butée de suspension 10 comporte un roulement 12 constitué d'une rondelle supérieure 14 et d'une rondelle inférieure 16 formant des chemins de roulement respectivement supérieur 141 et inférieur 161 sur lesquels roulent des corps roulants 18 constitués par des billes. Une pièce de support 20 est interposée entre la rondelle inférieure 16 et la spire supérieure d'un ressort à boudin 22 de la jambe de suspension. Un anneau 24 en matière élastomère peut être interposé le cas échéant entre la pièce de support et le ressort à boudin.

L'interface de fixation de la butée de suspension à la superstructure du véhicule, dans cet exemple la carrosserie, est constitué par une plaque métallique 26 pourvue de trous de fixation 261 pour des vis 27 de fixation à la carrosserie du véhicule. Un couvercle rigide 50 est interposé entre la rondelle supérieure 14 et la plaque de fixation 26. On entend ici par rigide le fait que le couvercle a une rigidité suffisante pour ne pas se déformer notablement au cours de l'utilisation du véhicule. Ce couvercle 50 présente une surface de contact avec la rondelle supérieure et une surface de contact avec la plaque de fixation, ces deux surfaces ayant un recouvrement radial au moins partiel.

Le couvercle 50 présente par ailleurs une jupe extérieure 501 située en regard et à faible distance d'une partie correspondante du support 20, de façon à constituer une perte de charge 52 entre la partie radiale extérieure du roulement 12 et l'extérieur en vue de protéger le roulement 12 contre les pollutions. Le roulement 12 et la pièce de support 20 délimitent un volume 28 de forme générale cylindrique dont une extrémité est fermée partiellement par le couvercle 50. Le roulement 12 débouche de son côté radial intérieur dans ce volume 28 où est disposée par ailleurs une butée de choc 30 constituée par un tampon en matière déformable, par exemple un polyuréthane. Le tampon 30 présente une forme générale tubulaire, avec une cavité centrale cylindrique 32 permettant le passage de la tige 70 d'un amortisseur 72, cette tige 70 passant au travers d'un trou central 34 ménagé dans la plaque de fixation 26 pour venir se fixer dans un bloc filtrant 74 logé entre dans une cavité située entre la plaque 26 et la carrosserie du véhicule.

L'extrémité inférieure 301 du tampon 30 fait saillie axialement en deçà du support 20 et constitue une face de contact pour le cylindre de l'amortisseur télescopique. L'extrémité plane supérieure 302 du tampon 30 repose sur la plaque de fixation 26. Le tampon est pourvu à cette extrémité supérieure d'un bourrelet annulaire 36 faisant saillie radialement vers l'extérieur. Ce bourrelet 36 est logé dans un espace annulaire 38 délimité par une portée radiale intérieure 40 du couvercle 50 et une portée correspondante 42 de la plaque de fixation 26, les deux portées annulaires 40, 42 étant situées en regard l'une de l'autre. Cet espace annulaire 38 s'étend radialement au-delà du bourrelet 36.

Le volume occupé par le tampon est protégé des polluants extérieurs par une manche déformable 44 fixée au support, radialement à l'intérieur du ressort à boudin 22, cette manche 44 s'étendant vers l'extrémité inférieure de la jambe de suspension. Ainsi se trouvent protégés le tampon 30 et le roulement 12.

Le tampon se trouve dans le volume 28 à distance de la manche 44 et du support 20. En cas de choc du cylindre 76 de l'amortisseur télescopique 72 contre la face saillante 301 du tampon et d'écrasement de ce dernier, le corps tubulaire du tampon 30 est libre de se déformer dans le volume 28, alors que le bourrelet 36 est libre de se déformer dans l'espace annulaire 38.

Suivant une variante non représentée, la manche déformable 44 peut être intégrée à l'anneau élastomère 24 d'appui et de filtration du ressort 22.

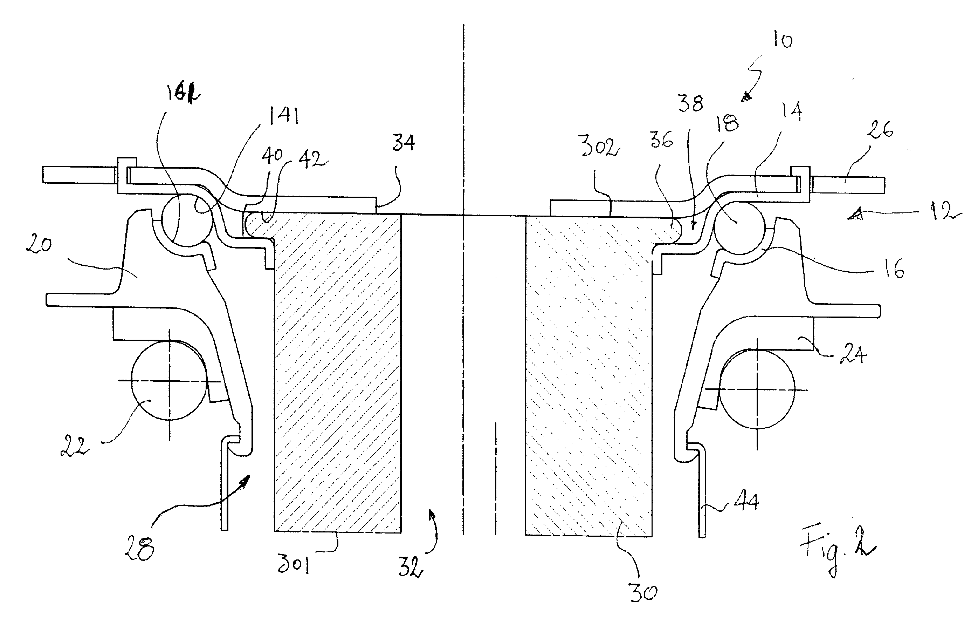

Le mode de réalisation illustré sur la figure 2 diffère du précédent par l'absence de couvercle 50. La rondelle supérieure 14 est directement accrochée à une plaque métallique 26, l'espace annulaire 38 étant constitué entre la rondelle supérieure 14 et la plaque 26 qui constitue l'élément de fixation à la superstructure du véhicule.

Les autres éléments de la butée de la figure 2 sont identiques aux éléments correspondants du mode de réalisation de la figure 1, et leur description ne sera pas dupliquée ici.

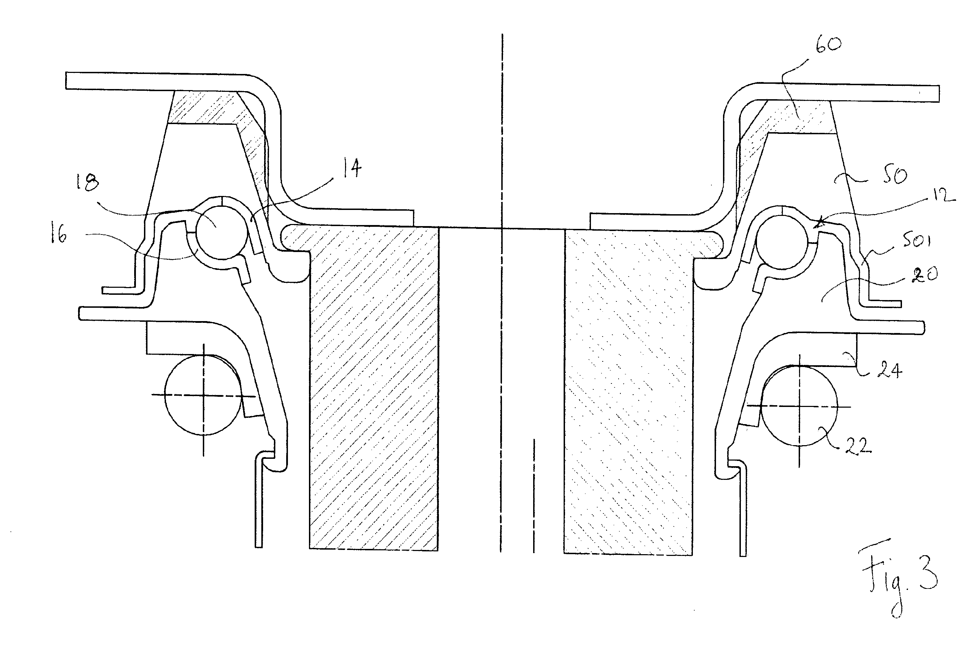

Le mode de réalisation de la figure 3 ne diffère de celui de la figure 1 que par l'adjonction d'un bloc filtrant 60 en matériau élastomère interposé entre le couvercle rigide 50 et la plaque de fixation 26. La fonction de ce bloc filtrant 60 est de limiter la transmission des vibrations de haute fréquence, dans la partie audible du spectre, à la superstructure du véhicule.

Selon une variante non représentée, il serait possible d'envisager que le couvercle complet soit en un matériau élastomère ayant des propriétés d'absorption des vibrations dans la partie haute du spectre.

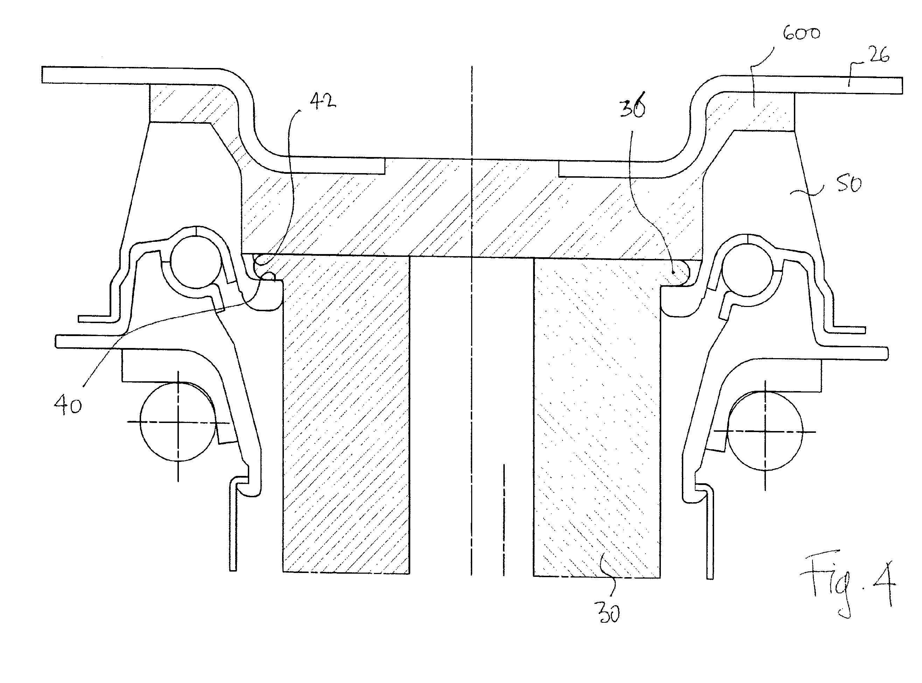

Le mode de réalisation de la figure 4 se distingue de celui de la figure 3 par le fait que le bloc filtrant 600 est partie intégrante de l'élément de fixation 26, surmoulé sur la plaque de fixation 26. Ainsi le bloc filtrant 600 s'interpose-t-il entre la plaque de fixation 26 et le tampon 30, le bourrelet 36 de celui-ci se trouvant logé entre des portées planes 40, 42 constituée par des faces en regard du bloc filtrant 600 et du couvercle 50.

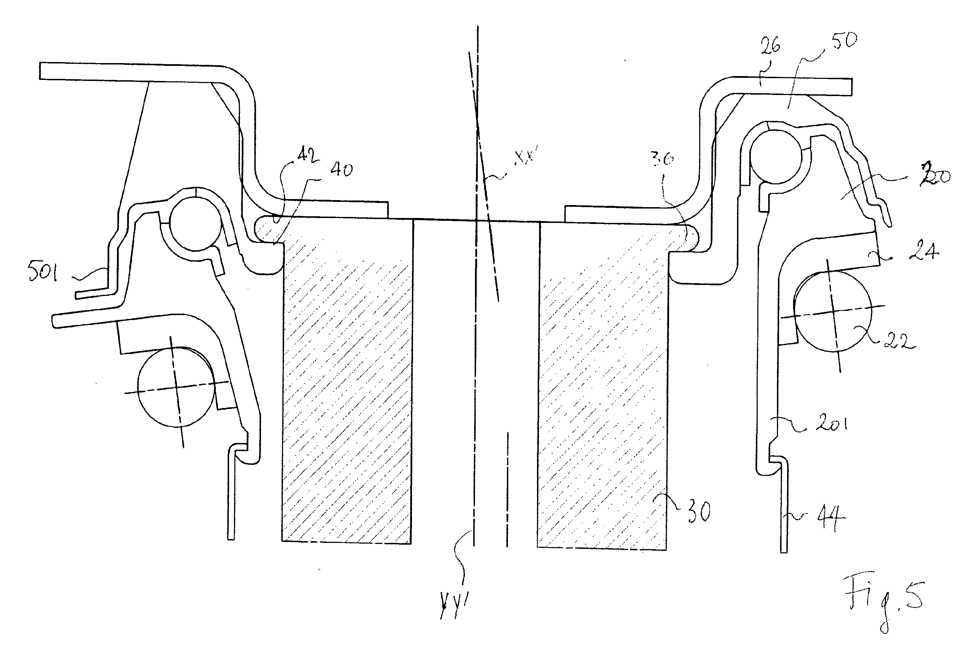

Le mode de réalisation illustré sur la figure 5 diffère des modes de réalisation précédents par son asymétrie. En effet, le roulement présente un axe de rotation XX' oblique par rapport à l'axe géométrique d'alignement de l'amortisseur YY', qui constitue également un axe de symétrie de révolution du tampon 30, ceci afin de définir un axe géométrique oblique pour le ressort à boudin 22, par rapport à l'axe de l'amortisseur télescopique. La plaque de fixation 26 définit un plan de fixation essentiellement perpendiculaire à l'axe de symétrie YY' du tampon. Le couvercle 50 comporte donc une surface supérieure annulaire plane de contact avec la plaque de fixation, perpendiculaire à l'axe de symétrie YY' du tampon, et une surface annulaire de contact avec la rondelle supérieure du roulement, qui est une surface de révolution autour de l'axe de rotation XX' du roulement. Le support 20, complémenté le cas échéant par un anneau élastomère filtrant 24, définit une surface plane d'appui pour le ressort à boudin, perpendiculaire à l'axe de rotation XX' du roulement. Le support 20 se prolonge par une jupe 201 à laquelle s'accroche la manche déformable 44 de protection du tampon et de l'amortisseur télescopique. Dans une position de repos de la butée, la manche 44 est sensiblement parallèle à l'axe de référence YY' de l'amortisseur télescopique. La fixation du tampon 30 est effectuée comme pour le mode de réalisation de la figure 2, par pincement du bourrelet 36 entre le couvercle 50 et la plaque de fixation 26.

Dans l'ensemble des modes de réalisation représentés, les rondelles sont constituées en métal, et préférentiellement obtenues par emboutissage, bien que d'autre mode de fabrication soient envisageables. Le support et le couvercle sont quant à eux préférentiellement en un matériau plastique rigide.

## Revendications

1. Butée de suspension (10) pour une jambe de force comportant un amortisseur télescopique (72) et un ressort à boudin (22), la butée comprenant
- un roulement (12) comportant une rondelle supérieure (14) et une rondelle inférieure (16) définissant des chemins de roulement sur lesquels roulent des corps roulants (18), a rondelle inférieure étant solidaire d'une interface d'appui contre une extrémité supérieure du ressort à boudin (22);
- un élément rigide de fixation (26) de la butée de suspension à la superstructure du véhicule, la rondelle supérieure étant en appui axial direct ou indirect sur l'élément rigide de fixation (26); et
- une butée de choc (30) en matériau déformable pour dissiper l'énergie de choc transmise par l'amortisseur ;
**caractérisé en ce que** la butée de choc comporte un bourrelet (36) annulaire logé dans un volume annulaire (38) délimité axialement par une portée inférieure (40) solidaire de la rondelle supérieure (14) et une portée supérieure (42) solidaire de l'élément rigide de fixation (26).

2. Butée de suspension (10) selon la revendication 1, **caractérisée en ce que** le volume annulaire (38) s'étend radialement vers l'extérieur au-delà du bourrelet (36).

3. Butée de suspension (10) selon l'une quelconque des revendications précédentes, **caractérisée en ce que** la butée de choc (30) présente une symétrie de révolution autour d'un axe oblique par rapport à l'axe de rotation du roulement.

4. Butée de suspension (10) selon l'une quelconque des revendications précédentes, **caractérisée en ce que** la portée inférieure (40) et la portée supérieure (42) sont parallèle l'une à l'autre.

5. Butée de suspension (10) selon l'une quelconque des revendications précédentes, **caractérisée en ce que** la portée annulaire inférieure est formée par un couvercle rigides (50) interposé entre la rondelle supérieure (14) et l'élément rigide de fixation (26).

6. Butée de suspension (10) selon la revendication 5, **caractérisée en ce que** le couvercle (50) comporte une jupe (501) extérieure de protection du roulement, située radialement à l'extérieur du roulement.

7. Butée de suspension (10) selon la revendication 5 ou la revendication 6, **caractérisée en ce que** le couvercle (50) est lié à l'élément rigide de fixation (26) par l'intermédiaire d'un bloc filtrant (60) élastomère annulaire.

8. Butée de suspension (10) selon la revendication 5 ou la revendication 6, **caractérisée en ce que** le couvercle (50) est directement lié à l'élément rigide de fixation.

9. Butée de suspension (10) selon l'une quelconque des revendications précédentes, **caractérisée en ce que** la portée annulaire supérieure (42) est formée par l'élément rigide de fixation (26).

10. Butée de suspension (10) selon l'une quelconque des revendications précédentes, **caractérisée en ce que** l'interface d'appui est constituée par un support en matière plastique.

11. Butée de suspension (10) selon l'une quelconque des revendications précédentes, **caractérisée en ce qu'**elle comporte en outre une manche déformable (44) de protection de l'amortisseur (72), fixe par rapport à la rondelle inférieure et entourant la butée de choc.

12. Jambe de suspension comportant un amortisseur télescopique (72), un ressort à boudin (22) entourant l'amortisseur télescopique (72) et une butée de suspension (10) selon l'une quelconque des revendications précédentes.

## Patentansprüche

1. Radaufhängungslager (10) für ein Federbein umfassend einen Teleskopstoßdämpfer (72) und eine Schraubenfeder (22), wobei das Lager Folgendes umfasst:
- ein Lager (12) umfassend eine obere Scheibe (14) und eine untere Scheibe (16), die Laufbahnen definieren, auf denen Rollkörper (18) rollen, wobei die untere Scheibe mit einer Schnittpunktstützfläche gegen ein oberes Ende der Schraubenfeder (22) fest verbunden ist;
- ein steifes Halteelement (26) des Radaufhängungslagers am Fahrzeugüberbau, wobei die obere Scheibe sich axial direkt oder indirekt auf das steife Halteelement (26) stützt; und
- einen Pralldämpfer (30) aus verformbarem Material, um die durch den Stoßdämpfer übertragene Stoßenergie zu zerstreuen;
**dadurch gekennzeichnet, dass** der Pralldämpfer einen ringförmigen Wulst (36) umfasst, der in einem ringförmigen Raum (38) untergebracht ist, der axial durch eine mit der oberen Scheibe (14) fest verbundene untere Tragfläche (40) und eine mit dem steifen Halteelement (26) fest verbundene obere Tragfläche (42) begrenzt wird.

2. Radaufhängungslager (10) nach Anspruch 1, **dadurch gekennzeichnet dass** der ringförmige Raum (38) sich radial nach außen über die Wulst (36) hinaus erstreckt.

3. Radaufhängungslager (10) nach einem der voranstehenden Ansprüche, **dadurch gekennzeichnet, dass** der Pralldämpfer (30) eine Rotationssymetrie um eine bezüglich der Rotationsachse des Lagers schräge Achse aufweist.

4. Radaufhängungslager (10) nach einem der voranstehenden Ansprüche, **dadurch gekennzeichnet, dass** die untere Tragfläche (40) und die obere Tragfläche (42) parallel zueinander sind.

5. Radaufhängungslager (10) nach einem der voranstehenden Ansprüche, **dadurch gekennzeichnet, dass** die ringförmige untere Tragfläche durch einen steifen, zwischen die obere Scheibe (14) und das steife Halteelement (26) gelegten Deckel (50) gebildet wird.

6. Radaufhängungslager (10) nach Anspruch 5, **dadurch gekennzeichnet, dass** der Deckel (50) einer äußeren Lagerschutzmantel (501) umfasst, der sich radial außen von dem Lager befindet.

7. Radaufhängungslager (10) nach Anspruch 5 oder nach Anspruch 6, **dadurch gekennzeichnet, dass** der Deckel (50) mit dem steifen Halteelement (26) durch einen ringförmigen Elastomer-Filterblock (60) verbunden ist.

8. Radaufhängungslager (10) nach Anspruch 5 oder nach Anspruch 6, **dadurch gekennzeichnet, dass** der Deckel (50) mit dem steifen Halteelement direkt verbunden ist.

9. Radaufhängungslager (10) nach einem der voranstehenden Ansprüche, **dadurch gekennzeichnet, dass** die ringförmige obere Tragfläche (42) durch das steife Halteement (26) gebildet wird.

10. Radaufhängungslager (10) nach einem der voranstehenden Ansprüche, **dadurch gekennzeichnet, dass** die Schnittpunktstützfläche durch eine Stützvorrichtung aus Kunststoff gebildet wird.

11. Radaufhängungslager (10) nach einem der voranstehenden Ansprüche, **dadurch gekennzeichnet, dass** es ferner einen verformbaren Stiel (44) zum Schutz des Stoßdämpfers (72) umfasst, der im Bezug auf die untere Scheibe fest ist und den Pralldämpfer umgibt.

12. Federbein, das einen Teleskopstoßdämpfer (72), eine den Teleskopstoßdämpfer umgebende Schraubenfeder (22) und einen Pralldämpfer (10) nach einem beliebigen der voranstehenden Ansprüche umfasst (72).

## Claims

1. Bump stop (10) for a MacPherson strut comprising a telescopic damper (72) and a coil spring (22), the stop including:
- a bearing (12) comprising an upper washer (14) and a lower washer (16) defining raceways in which run rolling members (18), the lower washer being secured to a support interface against an upper end of the coil spring (22);
- a rigid fastening element (26) fastening the bump stop to the superstructure of the vehicle, the upper washer directly or indirectly resting axially against the rigid fastening element (26); and
- a snubber (30) made from a deformable material for dissipating the impact force transmitted by the damper;
**characterised in that** the snubber comprises a circular ridge (36) housed in a circular volume (38) demarcated axially by a lower face (40) secured to the upper washer (14) and an upper face (42) secured to the rigid fastening element (26).

2. Bump stop (10) according to claim 1, **characterised in that** the circular volume (38) extends radially outwards beyond the ridge (36).

3. Bump stop (10) according to any one of the previous claims, **characterised in that** the snubber (30) has rotational symmetry around an oblique axis in relation to the rotational axis of the bearing.

4. Bump stop (10) according to any one of the previous claims, **characterised in that** the lower face (40) and the upper face (42) are parallel to each other.

5. Bump stop (10) according to any one of the previous claims, **characterised in that** the lower circular face is formed from a rigid cover (50) interposed between the upper washer (14) and the rigid fastening element (26).

6. Bump stop (10) according to claim 5, **characterised in that** the cover (50) comprises an outer protection skirt (501) protecting the bearing, positioned radially outside of the bearing.

7. Bump stop (10) according to claim 5 or claim 6, **characterised in that** the cover (50) is connected to the rigid fastening element (26) via a circular elastomer filtration block (60).

8. Bump stop (10) according to claim 5 or claim 6, **characterised in that** the cover (50) is directly connected to the rigid fastening element.

9. Bump stop (10) according to any one of the previous claims, **characterised in that** the upper circular face (42) is formed from the rigid fastening element (26).

10. Bump stop (10) according to any one of the previous claims, **characterised in that** the support interface is comprised from a support made from plastic material.

11. Bump stop (10) according to any one of the previous claims, **characterised in that** it further comprises a deformable protection sleeve (44) protecting the damper (72), fixed in relation to the lower washer and surrounding the snubber.

12. MacPherson strut comprising a telescopic damper (72), a coil spring (22) surrounding the telescopic damper (72) and a snubber (10) according to any one of the previous claims.
